# EUROPEAN PATENT APPLICATION

(11) **EP 4 815 321 A1**
(43) Date of publication of application: **30.09.2026**
(21) Application number: 24910693.1
(22) Date of filing: 10.12.2024
(51) Int. Cl.: H04B 7/0456

(54) **CHANNEL STATE INFORMATION REPORTING METHOD AND RELATED PRODUCT**

(30) Priority: 26.12.2023 CN 202311812897
(71) Applicant: Huawei Technologies Co., Ltd., Shenzhen, Guangdong 518129 (CN)
(72) Inventor: LI, Ting, Shenzhen, Guangdong 518129 (CN); YE, Chencheng, Shenzhen, Guangdong 518129 (CN); GAO, Junhui, Shenzhen, Guangdong 518129 (CN); XU, Jun, Shenzhen, Guangdong 518129 (CN); YUAN, Yiling, Shenzhen, Guangdong 518129 (CN); WANG, Xiaohan, Shenzhen, Guangdong 518129 (CN)
(74) Representative: Pfenning, Meinig & Partner mbB
(86) International application number: PCT/CN2024/138127
(87) International publication number: WO 2025/139762

(57) **Abstract**

Provided are a channel state information reporting method and a related product. The method includes: receiving a first reference signal; and sending first information based on the received first reference signal, where the first information includes indication information of at least one first spatial-domain basis vector corresponding to a first precoding matrix, the first precoding matrix is obtained based on the at least one first spatial-domain basis vector and at least one second spatial-domain basis vector, and the at least one second spatial-domain basis vector is obtained based on n second precoding matrices. A terminal device determines some spatial-domain basis vectors based on a historical measurement result, and only needs to report indication information of the remaining spatial-domain basis vectors corresponding to a precoding matrix, so that a network device can construct the precoding matrix based on the indication information of the spatial-domain basis vectors reported by the terminal device and the some spatial-domain basis vectors determined based on the historical measurement result, thereby reducing overheads for reporting channel state information.

## Description

This application claims priority to Chinese Patent Application No. 202311812897.3, filed with the China National Intellectual Property Administration on December 26, 2023 and entitled "CHANNEL STATE INFORMATION REPORTING METHOD AND RELATED PRODUCT", which is incorporated herein by reference in its entirety.

### TECHNICAL FIELD

This application relates to the field of communication technologies, and in particular, to a channel state information (channel state information, CSI) reporting method and a related product.

### BACKGROUND

In frequency division duplex (frequency division duplex, FDD) mode, a terminal device needs to report CSI of a downlink channel to a network device. The CSI includes a precoding matrix indicator (precoding matrix indicator, PMI). The network device determines, based on the PMI reported by the terminal device, precoding for data transmission to the terminal device.

PMI reporting is determined and reported based on a set of codebooks. The design of FDD CSI codebooks is a fundamental and critical issue in 5th generation (5th generation, 5G) and future communication systems.

Existing protocols support real-time PMI reporting for each measurement, resulting in high reporting overheads when high-precision codebooks are considered.

In view of this, how to reduce CSI reporting overheads is a problem to be urgently resolved.

### SUMMARY

This application provides a channel state information reporting method and a related product, to reduce CSI reporting overheads.

A first aspect provides a channel state information obtaining method. The method may be implemented by a terminal device, or a chip or circuit used in a terminal device.

The method includes: receiving a first reference signal; and sending first information based on the first reference signal, where the first information includes indication information of at least one first spatial-domain basis vector corresponding to a first precoding matrix, the first precoding matrix is obtained based on the at least one first spatial-domain basis vector and at least one second spatial-domain basis vector, the at least one second spatial-domain basis vector is obtained based on n second precoding matrices, and n is a positive integer greater than or equal to 1.

In this aspect, the terminal device determines some spatial-domain basis vectors based on a historical measurement result, and only needs to report indication information of the remaining spatial-domain basis vectors corresponding to a precoding matrix, so that a network device can construct the precoding matrix based on the indication information of the spatial-domain basis vectors reported by the terminal device and the some spatial-domain basis vectors determined based on the historical measurement result. In consideration of a slow-varying characteristic of a channel in spatial domain, the some spatial-domain basis vectors determined based on the historical measurement result can well reflect spatial-domain characteristics of the to-be-reported precoding matrix, and only a small quantity of additional spatial-domain basis vectors need to be indicated to refine a spatial-domain beam direction, thereby reducing overheads for reporting channel state information.

Both the at least one first spatial-domain basis vector and the at least one second spatial-domain basis vector are used for representing spatial-domain characteristics of the first precoding matrix. It may be understood that the at least one first spatial-domain basis vector is used for refining a spatial-domain beam direction of the at least one second spatial-domain basis vector, so that a spatial-domain basis vector set formed by the at least one first spatial-domain basis vector and the at least one second spatial-domain basis vector can better represent the spatial-domain characteristics of the first precoding matrix with the smallest quantity of spatial-domain basis vectors.

In a possible implementation, before receiving the first reference signal, the method further includes: performing n receptions of second reference signals; and sending indication information of the n second precoding matrices separately based on the second reference signals in the n receptions.

In this implementation, the indication information of the n second precoding matrices is used for obtaining the at least one second spatial-domain basis vector. Relative to the first precoding matrix, the n second precoding matrices are precoding matrices obtained through historical measurement and reporting.

In another possible implementation, the at least one second spatial-domain basis vector is obtained based on precoding vectors corresponding to X transport layers on a first frequency-domain unit in the n second precoding matrices.

In this implementation, because the spatial-domain characteristics vary slowly, the at least one second spatial-domain basis vector may be extracted from the precoding vectors corresponding to the X transport layers on the first frequency-domain unit in the n second precoding matrices, for representing the spatial-domain characteristics of the first precoding matrix.

In still another possible implementation, n = 1, and X is less than or equal to a quantity of transport layers corresponding to the second precoding matrix.

In this implementation, the at least one second spatial-domain basis vector may be extracted from precoding vectors corresponding to X transport layers on a first frequency-domain unit in a second precoding matrix obtained through previous measurement and reporting.

In still another possible implementation, n is greater than 1, and the at least one second spatial-domain basis vector is obtained based on an average of the precoding vectors corresponding to the X transport layers on the first frequency-domain unit in the n second precoding matrices.

In this implementation, the at least one second spatial-domain basis vector is extracted from the average of the precoding vectors corresponding to the X transport layers on the first frequency-domain unit in the n second precoding matrices, so that precision of the first precoding matrix can be improved with limited overheads, or reporting overheads can be reduced with same reporting precision.

In still another possible implementation, n is greater than 1, and the at least one second spatial-domain basis vector is obtained based on a singular value decomposition value of a covariance matrix obtained from the precoding vectors corresponding to the X transport layers on the first frequency-domain unit in the n second precoding matrices.

In this implementation, the at least one second spatial-domain basis vector is extracted from the singular value decomposition value of the covariance matrix obtained from the precoding vectors corresponding to the X transport layers on the first frequency-domain unit in the n second precoding matrices, so that precision of the first precoding matrix can be improved.

In still another possible implementation, X is less than or equal to a minimum of quantities of transport layers corresponding to the n second precoding matrices.

In still another possible implementation, the first frequency-domain unit is k same frequency-domain units corresponding to the n second precoding matrices, each of the n second precoding matrices corresponds to K frequency-domain units, and 1 ≤ k ≤ K.

In still another possible implementation, that the first precoding matrix is obtained based on the at least one first spatial-domain basis vector and the at least one second spatial-domain basis vector includes: the first precoding matrix is obtained based on an orthogonalization result of the at least one first spatial-domain basis vector and the at least one second spatial-domain basis vector.

In this implementation, the at least one first spatial-domain basis vector and the at least one second spatial-domain basis vector are orthogonalized, so that a spatial-domain basis vector set obtained after the orthogonalization can more accurately represent the spatial-domain characteristics of the first spatial-domain basis vector with the smallest quantity of spatial-domain basis vectors. In this way, precision of the first precoding matrix can be improved with limited overheads, or reporting overheads can be reduced with same reporting precision.

A second aspect provides a channel state information obtaining method. The method may be implemented by a network device, or a chip or circuit used in a network device.

The method includes: sending a first reference signal; receiving first information, where the first information includes indication information of at least one first spatial-domain basis vector corresponding to a first precoding matrix, the first precoding matrix is obtained based on the at least one first spatial-domain basis vector and at least one second spatial-domain basis vector, the at least one second spatial-domain basis vector is obtained based on n second precoding matrices, and n is a positive integer greater than or equal to 1; and obtaining the first precoding matrix based on the first information.

In this aspect, the network device receives indication information of some spatial-domain basis vectors corresponding to a precoding matrix, as reported by a terminal device, and the network device can construct the precoding matrix based on the indication information of the spatial-domain basis vectors reported by the terminal device and a historical measurement result. In consideration of a slow-varying characteristic of a channel in spatial domain, some spatial-domain basis vectors determined based on the historical measurement result can well reflect spatial-domain characteristics of the to-be-reported precoding matrix, and only a small quantity of additional spatial-domain basis vectors need to be indicated to refine a spatial-domain beam direction, thereby reducing overheads for reporting channel state information.

Both the at least one first spatial-domain basis vector and the at least one second spatial-domain basis vector are used for representing spatial-domain characteristics of the first precoding matrix. It may be understood that the at least one first spatial-domain basis vector is used for refining a spatial-domain beam direction of the at least one second spatial-domain basis vector, so that a spatial-domain basis vector set formed by the at least one first spatial-domain basis vector and the at least one second spatial-domain basis vector can better represent the spatial-domain characteristics of the first precoding matrix with the smallest quantity of spatial-domain basis vectors.

In a possible implementation, before sending the first reference signal, the method further includes: sending n second reference signals; and receiving indication information of the n second precoding matrices separately based on the n second reference signals.

In this implementation, the indication information of the n second precoding matrices is used for obtaining the at least one second spatial-domain basis vector. Relative to the first precoding matrix, the n second precoding matrices are precoding matrices obtained through historical measurement and reporting.

In another possible implementation, the at least one second spatial-domain basis vector is obtained based on precoding vectors corresponding to X transport layers on a first frequency-domain unit in the n second precoding matrices.

In this implementation, because the spatial-domain characteristics vary slowly, the at least one second spatial-domain basis vector is obtained based on the precoding vectors corresponding to the X transport layers on the first frequency-domain unit in the n second precoding matrices, for representing the spatial-domain characteristics of the first precoding matrix.

In still another possible implementation, n = 1, and X is less than or equal to a quantity of transport layers corresponding to the second precoding matrix.

In this implementation, the at least one second spatial-domain basis vector is obtained based on precoding vectors corresponding to X transport layers on a first frequency-domain unit in a second precoding matrix obtained through previous measurement and reporting.

In still another possible implementation, n is greater than 1, and the at least one second spatial-domain basis vector is obtained based on an average of the precoding vectors corresponding to the X transport layers on the first frequency-domain unit in the n second precoding matrices.

In this implementation, the at least one second spatial-domain basis vector is obtained based on the average of the precoding vectors corresponding to the X transport layers on the first frequency-domain unit in the n second precoding matrices, so that precision of the first precoding matrix can be improved with limited overheads, or reporting overheads can be reduced with same reporting precision.

In still another possible implementation, n is greater than 1, and the at least one second spatial-domain basis vector is obtained based on a singular value decomposition value of a covariance matrix obtained from the precoding vectors corresponding to the X transport layers on the first frequency-domain unit in the n second precoding matrices.

In this implementation, the at least one second spatial-domain basis vector is obtained based on the singular value decomposition value of the covariance matrix obtained from the precoding vectors corresponding to the X transport layers on the first frequency-domain unit in the n second precoding matrices, so that precision of the first precoding matrix can be improved.

In still another possible implementation, X is less than or equal to a minimum of quantities of transport layers corresponding to the n second precoding matrices.

In still another possible implementation, the first frequency-domain unit is k same frequency-domain units corresponding to the n second precoding matrices, each of the n second precoding matrices corresponds to K frequency-domain units, and 1 ≤ k ≤ K.

In still another possible implementation, that the first precoding matrix is obtained based on the at least one first spatial-domain basis vector and the at least one second spatial-domain basis vector includes: the first precoding matrix is obtained based on an orthogonalization result of the at least one first spatial-domain basis vector and the at least one second spatial-domain basis vector.

In this implementation, the at least one first spatial-domain basis vector and the at least one second spatial-domain basis vector are orthogonalized, so that a spatial-domain basis vector set obtained after the orthogonalization can more accurately represent the spatial-domain characteristics of the first spatial-domain basis vector with the smallest quantity of spatial-domain basis vectors. In this way, precision of the first precoding matrix can be improved with limited overheads, or reporting overheads can be reduced with same reporting precision.

In still another possible implementation, obtaining the first precoding matrix based on the first information includes: obtaining the at least one second spatial-domain basis vector based on the indication information of the n second precoding matrices; and obtaining the first precoding matrix based on the at least one first spatial-domain basis vector and the at least one second spatial-domain basis vector.

In this implementation, before current measurement and reporting, the network device has received the indication information of the n second precoding matrices. In this case, the at least one second spatial-domain basis vector may be obtained based on the indication information of the n second precoding matrices, and after the indication information of the at least one first spatial-domain basis vector is received, the first precoding matrix may be constructed based on the at least one first spatial-domain basis vector and the at least one second spatial-domain basis vector.

A third aspect provides a communication apparatus. The communication apparatus can implement the method in the first aspect or any one of the implementations of the first aspect. For example, the communication apparatus may be a chip or a terminal device. The foregoing method may be implemented by software, hardware, or hardware executing corresponding software.

In a possible implementation, the apparatus includes a transceiver unit and a processing unit. The transceiver unit is configured to receive a first reference signal; the processing unit is configured to generate first information based on the first reference signal, where the first information includes indication information of at least one first spatial-domain basis vector corresponding to a first precoding matrix, the first precoding matrix is obtained based on the at least one first spatial-domain basis vector and at least one second spatial-domain basis vector, the at least one second spatial-domain basis vector is obtained based on n second precoding matrices, and n is a positive integer greater than or equal to 1; and the transceiver unit is further configured to send the first information.

Optionally, the transceiver unit is further configured to perform n receptions of second reference signals before receiving the first reference signal; and the transceiver unit is further configured to send indication information of the n second precoding matrices separately based on the second reference signals in the n receptions.

Optionally, the at least one second spatial-domain basis vector is obtained based on precoding vectors corresponding to X transport layers on a first frequency-domain unit in the n second precoding matrices.

Optionally, n = 1, and X is less than or equal to a quantity of transport layers corresponding to the second precoding matrix.

Optionally, n is greater than 1, and the at least one second spatial-domain basis vector is obtained based on an average of the precoding vectors corresponding to the X transport layers on the first frequency-domain unit in the n second precoding matrices.

Optionally, n is greater than 1, and the at least one second spatial-domain basis vector is obtained based on a singular value decomposition value of a covariance matrix obtained from the precoding vectors corresponding to the X transport layers on the first frequency-domain unit in the n second precoding matrices.

Optionally, X is less than or equal to a minimum of quantities of transport layers corresponding to the n second precoding matrices.

Optionally, the first frequency-domain unit is k same frequency-domain units corresponding to the n second precoding matrices, each of the n second precoding matrices corresponds to K frequency-domain units, and 1 ≤ k ≤ K.

Optionally, that the first precoding matrix is obtained based on the at least one first spatial-domain basis vector and the at least one second spatial-domain basis vector includes: the first precoding matrix is obtained based on an orthogonalization result of the at least one first spatial-domain basis vector and the at least one second spatial-domain basis vector.

For further features and beneficial effects, refer to related descriptions in the first aspect.

A fourth aspect provides a communication apparatus. The communication apparatus can implement the method in the second aspect or any one of the implementations of the second aspect. For example, the communication apparatus may be a chip or a network device. The foregoing method may be implemented by software, hardware, or hardware executing corresponding software.

In a possible implementation, the apparatus includes a transceiver unit and a processing unit. The transceiver unit is configured to send a first reference signal; the transceiver unit is further configured to receive first information, where the first information includes indication information of at least one first spatial-domain basis vector corresponding to a first precoding matrix, the first precoding matrix is obtained based on the at least one first spatial-domain basis vector and at least one second spatial-domain basis vector, the at least one second spatial-domain basis vector is obtained based on n second precoding matrices, and n is a positive integer greater than or equal to 1; and the processing unit is configured to obtain the first precoding matrix based on the first information.

Optionally, the transceiver unit is further configured to send n second reference signals before sending the first reference signal; and the transceiver unit is further configured to receive indication information of the n second precoding matrices separately based on the n second reference signals.

Optionally, the at least one second spatial-domain basis vector is obtained based on precoding vectors corresponding to X transport layers on a first frequency-domain unit in the n second precoding matrices.

Optionally, n = 1, and X is less than or equal to a quantity of transport layers corresponding to the second precoding matrix.

Optionally, n is greater than 1, and the at least one second spatial-domain basis vector is obtained based on an average of the precoding vectors corresponding to the X transport layers on the first frequency-domain unit in the n second precoding matrices.

Optionally, n is greater than 1, and the at least one second spatial-domain basis vector is obtained based on a singular value decomposition value of a covariance matrix obtained from the precoding vectors corresponding to the X transport layers on the first frequency-domain unit in the n second precoding matrices.

Optionally, X is less than or equal to a minimum of quantities of transport layers corresponding to the n second precoding matrices.

Optionally, the first frequency-domain unit is k same frequency-domain units corresponding to the n second precoding matrices, each of the n second precoding matrices corresponds to K frequency-domain units, and 1 ≤ k ≤ K.

Optionally, that the first precoding matrix is obtained based on the at least one first spatial-domain basis vector and the at least one second spatial-domain basis vector includes: the first precoding matrix is obtained based on an orthogonalization result of the at least one first spatial-domain basis vector and the at least one second spatial-domain basis vector.

Optionally, the processing unit is further configured to obtain the at least one second spatial-domain basis vector based on the indication information of the n second precoding matrices; and the processing unit is further configured to obtain the first precoding matrix based on the at least one first spatial-domain basis vector and the at least one second spatial-domain basis vector.

For further features and beneficial effects, refer to related descriptions in the second aspect.

In still another possible implementation, the communication apparatus in the third aspect and the fourth aspect includes a processor coupled to a memory. The processor is configured to support the apparatus in performing corresponding functions in the channel state information reporting method. The memory is configured to be coupled to the processor, and stores a computer program (or computer-executable instructions) and/or data necessary for the apparatus. Optionally, the communication apparatus may further include a communication interface configured to support communication between the apparatus and another network element, for example, sending or receiving data and/or signals. For example, the communication interface may be a transceiver, a circuit, a bus, a module, or another type of communication interface. Optionally, the memory may be located inside the communication apparatus and integrated with the processor, or may be located outside the communication apparatus.

In still another possible implementation, the communication apparatus in the third aspect and the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to receive a signal from a communication apparatus other than the communication apparatus and transmit the signal to the processor, or transmit a signal from the processor to a communication apparatus other than the communication apparatus. When the communication apparatus is a chip, the transceiver apparatus is a transceiver circuit or an input/output interface.

When the communication apparatus in the third aspect and the fourth aspect is a chip, a sending unit may be an output unit, such as an output circuit or a communication interface, and a receiving unit may be an input unit, such as an input circuit or a communication interface. When the communication apparatus is a terminal device, a sending unit may be a transmitter or a transmitting machine, and a receiving unit may be a receiver or a receiving machine.

A fifth aspect provides a communication system. The communication system includes the communication apparatus according to the third aspect or any one of the implementations of the third aspect, and the communication apparatus according to the fourth aspect or any one of the implementations of the fourth aspect.

A sixth aspect provides a computer-readable storage medium storing a computer program or instructions. When the program or the instructions are executed by a processor, the method according to the first aspect or any one of the implementations of the first aspect is implemented, or the method according to the second aspect or any one of the implementations of the second aspect is implemented.

A seventh aspect provides a computer program product. When the computer program product is executed on a compute device, the method according to the first aspect or any one of the implementations of the first aspect is implemented, or the method according to the second aspect or any one of the implementations of the second aspect is implemented.

### BRIEF DESCRIPTION OF DRAWINGS

FIG. 1 is a diagram of an architecture of a communication system 1000 to which embodiments of this application are applied;
FIG. 2A(a) to FIG. 2D are diagrams of network architectures according to embodiments of this application;
FIG. 3 is a diagram of a basic procedure in which a network device and a terminal device perform CSI estimation;
FIG. 4 is a diagram of a structure of an existing PMI codebook;
FIG. 5 is a schematic flowchart of a channel state information reporting method according to an embodiment of this application;
FIG. 6 is a diagram of a structure of a PMI codebook according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The following describes embodiments of this application with reference to the accompanying drawings in embodiments of this application.

Technical solutions provided in this application may be applied to various communication systems, for example, may be applied to a 5G communication system, a future evolved system, or a plurality of converged communication systems, or may be applied to an existing communication system. The technical solutions provided in this application may include a plurality of application scenarios, such as machine to machine (machine to machine, M2M), macro-micro communication, enhanced mobile broadband (enhanced mobile broadband, eMBB), ultra reliable & low latency communication (ultra reliable & low latency communication, uRLLC), and massive machine type communication (massive machine type communication, mMTC). These scenarios may include but are not limited to: a scenario of communication between terminal devices, a scenario of communication between network devices, and a scenario of communication between a network device and a terminal device. The network device includes a network device and a core network device. An example in which the technical solutions are applied to a scenario of communication between a network device and a terminal device is used below for description.

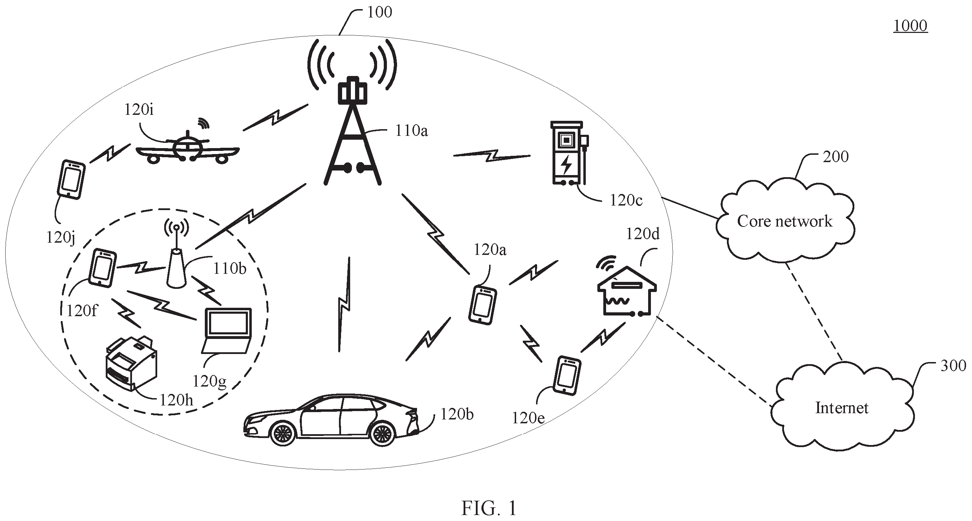

FIG. 1 is a diagram of an architecture of a communication system 1000 to which embodiments of this application are applied. As shown in FIG. 1, the communication system includes a radio access network 100 and a core network 200. Optionally, the communication system 1000 may further include the Internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless or wired manner. The core network device and the network device may be different physical devices independent of each other, or functions of the core network device and logical functions of the network device may be integrated into a same physical device, or some functions of the core network device and some functions of the network device may be integrated into one physical device. Mutual connections between terminal devices and between network devices may be implemented in a wired or wireless manner. FIG. 1 is merely a diagram. The communication system may further include another network device, for example, may further include a wireless relay device and a wireless backhaul device, which are not shown in FIG. 1.

Optionally, during actual application, the wireless communication system may include a plurality of network devices (also referred to as access network devices) and may also include a plurality of terminal devices. One network device may serve one or more terminal devices. One terminal device may also access one or more network devices. Quantities of terminal devices and network devices that are included in the wireless communication system are not limited in embodiments of this application.

The network device may be an entity configured to transmit or receive a signal on a network side. The network device may be an access device via which the terminal device accesses the wireless communication system in a wireless manner. For example, the network device may be a base station. The base station may cover the following various names in a broad sense, or may be replaced with the following names: a radio access network (radio access network, RAN) node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting and receiving point (transmitting and receiving point, TRP), a transmitting point (transmitting point, TP), a master eNodeB (master eNB, MeNB), a secondary eNodeB (secondary eNB, SeNB), a multi-standard radio (multi-standard radio, MSR) node, a home base station, a network controller, an access node, a radio node, an access point (access point, AP), a transmitting node, a transceiver node, a baseband unit (baseband unit, BBU), a remote radio unit (remote radio unit, RRU), an active antenna unit (active antenna unit, AAU), a radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node or the like, or a combination thereof. The network device may alternatively be a communication module, a modem, or a chip that is disposed in the foregoing device or apparatus. The network device may alternatively be a mobile switching center, a device that takes on a base station function in device-to-device (device-to-device, D2D) communication, vehicle-to-everything (vehicle-to-everything, V2X) communication, and machine-to-machine (machine-to-machine, M2M) communication, a network-side device in a 6G network, a device that takes on a base station function in a future communication system, or the like. The network device may support networks with a same access technology or different access technologies. A specific technology and a specific device form factor that are used by the network device are not limited in embodiments of this application.

The network device may be fixed or movable. For example, the base stations 110a and 110b are stationary, and are responsible for wireless transmission and reception in one or more cells from the terminal device 120. A helicopter or an uncrewed aerial vehicle 120i shown in FIG. 1 may be configured to serve as a mobile base station, and one or more cells may move based on a location of the mobile base station 120i. In another example, the helicopter or the uncrewed aerial vehicle (120i) may be configured to serve as a terminal device communicating with the base station 110b.

In this application, a communication apparatus configured to implement functions of the access network may be an access network device, or may be a network device having some functions of the access network, or may be an apparatus that can support implementing the functions of the access network, such as a chip system, a hardware circuit, a software module, or a hardware circuit plus a software module. The apparatus may be mounted in an access network device or used together with an access network device. In the method in this application, an example in which the communication apparatus configured to implement the functions of the access network device is an access network device is used for description.

The terminal device may be an entity configured to receive or transmit a signal on a user side, for example, a mobile phone. The terminal device may be configured to connect people, things, and machines. The terminal device may communicate with one or more core networks via the network device. The terminal device includes a handheld device having a wireless connection function, another processing device connected to a wireless modem, an on-board device, and the like. The terminal device may be a portable, pocket-sized, handheld, computer built-in, or on-board mobile apparatus. The terminal device 120 may be widely used in various scenarios, such as cellular communication, D2D, V2X, point-to-point (point-to-point, P2P), machine-to-machine (machine-to-machine, M2M), machine-type communication (machine-type communication, MTC), Internet of Things (Internet of Things, IoT), virtual reality (virtual reality, VR), augmented reality (augmented reality, AR), industrial control, self driving, remote medical, a smart grid, smart furniture, a smart office, a smart wearable, smart transportation, a smart city, an unmanned aerial vehicle, a robot, remote sensing, passive sensing, positioning, navigation and tracking, and autonomous delivery and mobility. Some examples of the terminal device 120 are 3GPP standard user equipment (user equipment, UE), a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an unmanned aerial vehicle, a helicopter, an aerial vehicle, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile Internet device (mobile Internet device, MID), a wearable device such as a smartwatch, a VR device, an AR device, a wireless terminal in industrial control (industrial control), a terminal in an Internet of Vehicles system, a wireless terminal in self driving (self driving), a wireless terminal in a smart grid (smart grid), a wireless terminal in transportation safety (transportation safety), a wireless terminal in a smart city (smart city) such as a smart fuel dispenser, a terminal device on a high-speed train, and a wireless terminal in a smart home (smart home) such as a smart speaker, a smart coffee machine, or a smart printer. The terminal device 120 may be a wireless device in the foregoing scenarios or an apparatus configured to be disposed in the wireless device, for example, a communication module, a modem, or a chip in the foregoing device. The terminal device may also be referred to as a terminal, a terminal device, user equipment (user equipment, UE), a mobile station (mobile station, MS), a mobile terminal (mobile terminal, MT), or the like. Alternatively, the terminal device may be a terminal device in a future wireless communication system. The terminal device may be used in a dedicated network device or a general-purpose device. A specific technology and a specific device form factor used by the terminal device are not limited in embodiments of this application.

Optionally, the terminal device may be configured to serve as a base station. For example, the UE may serve as a scheduling entity that provides a sidelink signal between UEs in V2X, D2D, P2P, or the like. As shown in FIG. 1, the cellular phone 120a and the car 120b communicate with each other by using sidelink signals. The cellular phone 120a communicates with the smart home device 120e without relaying communication signals via the base station 110b.

In this application, a communication apparatus configured to implement functions of the terminal device may be a terminal device, or may be a terminal device having some functions of the terminal device, or may be an apparatus that can support implementing the functions of the terminal device, for example, a chip system. The apparatus may be mounted in the terminal device or used together with the terminal device. In this application, the chip system may include a chip, or may include a chip and another discrete component. In the technical solutions provided in this application, an example in which the communication apparatus is a terminal device or UE is used for description.

Optionally, the wireless communication system usually includes a cell, the base station provides cell management, and the base station provides a communication service for a plurality of mobile stations (mobile station, MS) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at one rack. Optionally, one cell may correspond to one carrier or component carrier.

In some deployments, the network device mentioned in embodiments of this application may be a device including a CU or a DU, a device including a CU and a DU, or a device including a control plane CU node (central unit-control plane (central unit-control plane, CU-CP)), a user plane CU node (central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes separately implement some functions of a base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio unit, for example, included in an RRU, an AAU, or an RRH.

The RAN node may support one or more types of fronthaul interfaces, and different fronthaul interfaces correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If a fronthaul interface between the DU and the RU is another type of interface, compared with the CPRI, the interface performs transfer of some downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition are transferred from the DU to the RU for implementation; and for uplink, one or more of digital beamforming (beamforming, BF) or fast Fourier transform (fast Fourier transform, FFT)/cyclic prefix (cyclic prefix, CP) removal are transferred from the DU to the RU for implementation. In a possible implementation, the interface may be an enhanced common public radio interface (enhanced common public radio interface, eCPRI). In an eCPRI architecture, there are different split manners for the DU and RU, corresponding to different categories (category, Cat) of eCPRIs such as eCPRI Cat A, B, C, D, E, or F.

The eCPRI Cat A is used as an example. For downlink transmission, splitting is performed at layer mapping. The DU is configured to implement the layer mapping and one or more functions before the layer mapping (for example, one or more of encoding, rate matching, scrambling, modulation, and the layer mapping), and another function after the layer mapping (for example, one or more of RE mapping, digital beamforming (beamforming, BF), or inverse fast Fourier transform (inverse fast Fourier transform, IFFT)/cyclic prefix (cyclic prefix, CP) addition) is transferred to the RU for implementation. For uplink transmission, splitting is performed at RE demapping. The DU is configured to implement the demapping and one or more functions before the demapping (for example, one or more of the following functions: decoding, de-rate matching, descrambling, demodulation, inverse discrete Fourier transform (inverse discrete Fourier transform, IDFT), channel equalization, and the RE demapping), and another function after the demapping (for example, one or more of digital BF or fast Fourier transform (fast Fourier transform, FFT)/CP removal) is transferred to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support the network device in implementing the function, such as a chip system, a hardware circuit, a software module, or a hardware circuit plus a software module. The apparatus may be mounted in the network device or used together with the network device. In embodiments of this application, an example in which the apparatus configured to implement the function of the network device is a network device is merely used for description, and constitutes no limitation on the solutions in embodiments of this application.

It may be understood that this application may be applied between a network device and a terminal device.

Communication between the network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer for transmission of data related to an AI function.

Data transmission between a network device and a terminal device is used as an example. Data transmission needs to pass through the user plane protocol layer, for example, through the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. The data is correspondingly encapsulated at each layer. For example, data received by a layer from an upper layer of the layer is considered as a service data unit (service data unit, SDU) of the layer, is encapsulated at the layer into a protocol data unit (protocol data unit, PDU), and is then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then provided by the application layer for the application. In another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

To support an AI technology in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, in a host or a cloud server in an over-the-top (over-the-top, OTT) system. The AI node may communicate with another device in the communication system. For example, the another device may be one or more of the following: a network device, a terminal device, or a network element of a core network.

It may be understood that a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, or may be integrated into a same device to implement different functions, or may be network elements in a hardware device, or may be software functions running on dedicated hardware, or may be virtualized functions instantiated on a platform (for example, a cloud platform). A specific form of the AI node is not limited in this application.

The AI node may be an AI network element or an AI module.

One or more AI modules are disposed in one or more devices of these network element nodes, such as a core network device, an access network node (a RAN node), a terminal, or an OAM. The access network node may serve as an independent RAN node, or may include a plurality of RAN nodes, for example, include a CU and a DU. One or more AI modules may be further disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

The communication system includes a RAN intelligent controller (RAN intelligent controller, RIC). For example, the RIC may be the AI module, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be at a granularity of seconds. A real-time RIC mainly processes near-real-time information, for example, delay-sensitive data. A delay of the data is at a granularity of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

Alternatively, the near-real-time RIC and the non-real-time RIC each may be independently disposed as a network element. Optionally, the near-real-time RIC and the non-real-time RIC may alternatively serve as a part of another device. For example, the near-real-time RIC is disposed in the RAN node (for example, in the CU or the DU), and the non-real-time RIC is disposed in an OAM, a cloud server, a core network device, or another network device.

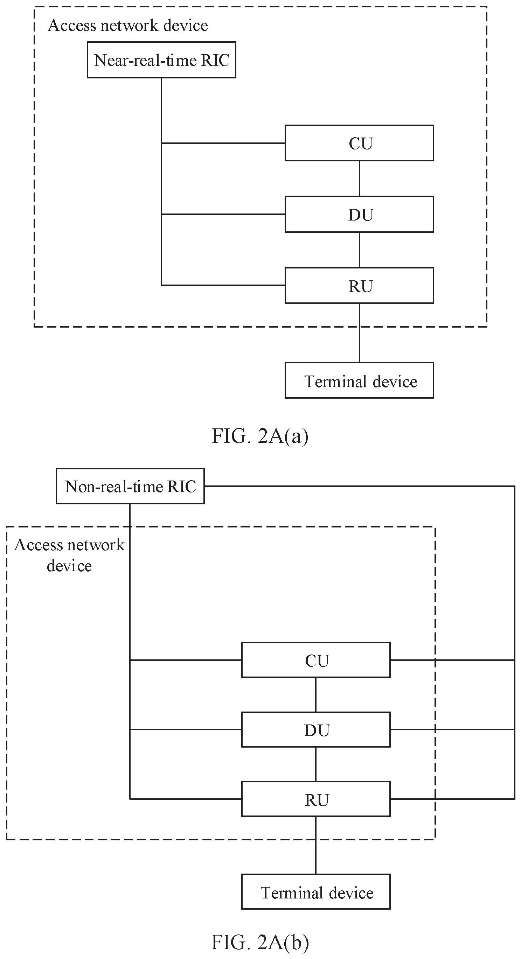

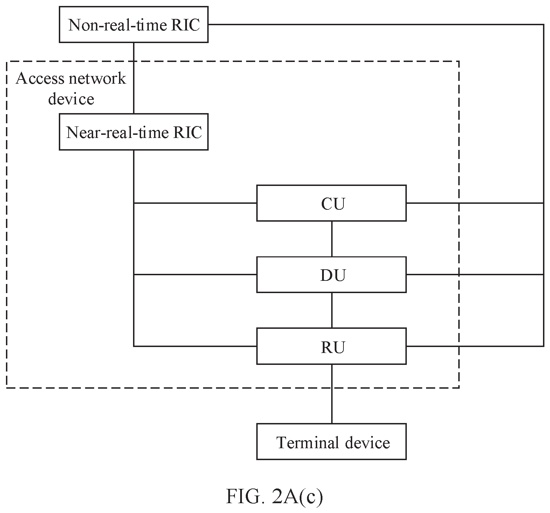

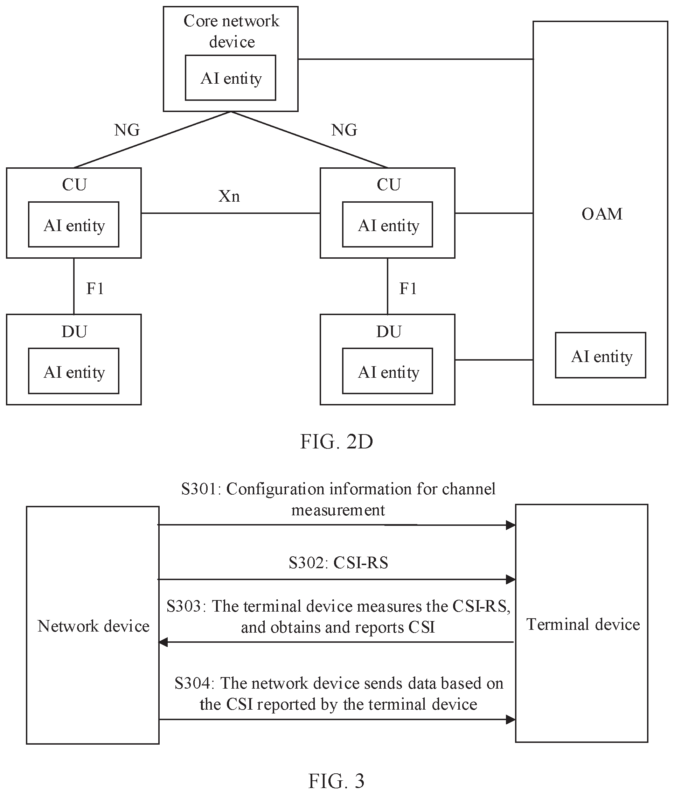

For example, arrangement of the near-real-time RIC and the non-real-time RIC in a network architecture may be shown in FIG. 2A(a) to FIG. 2D.

As shown in FIG. 2A(a), in a first possible implementation, an access network device includes a near-real-time RIC module, to perform model learning and/or inference.

As shown in FIG. 2A(b), in a second possible implementation, in a communication system, a non-real-time RIC may be included outside an access network device. Optionally, the non-real-time RIC may be located in an OAM or a core network device.

As shown in FIG. 2A(c), in a third possible implementation, an access network device includes a near-real-time RIC, and a non-real-time RIC is included outside the access network device. Optionally, the non-real-time RIC may be located in an OAM or a core network device.

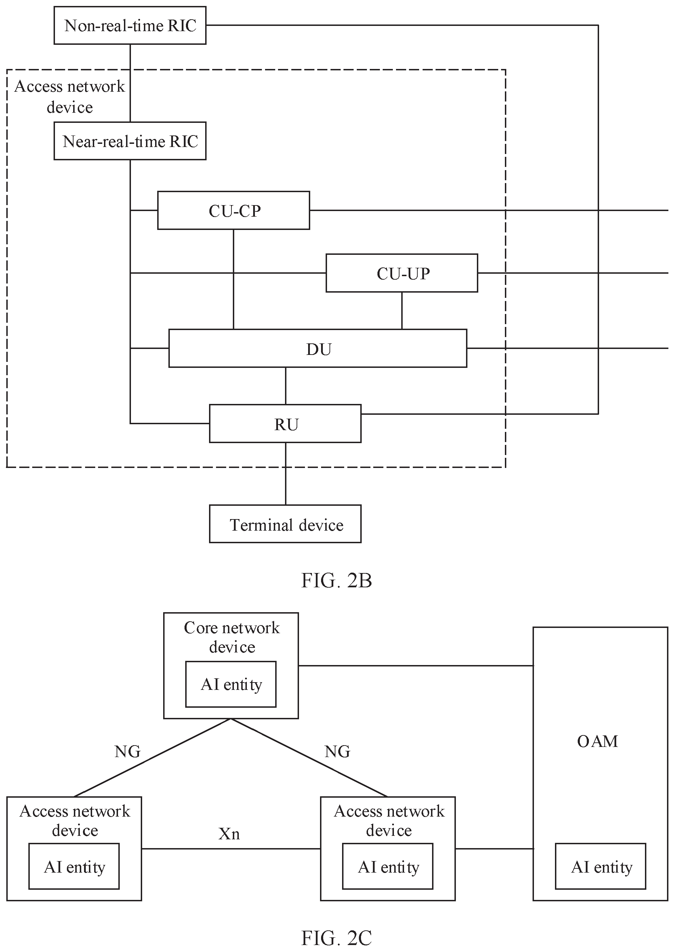

Compared with FIG. 2A(c), in FIG. 2B, a CU is split into a CU-CP and a CU-UP. A near-real-time RIC and a non-real-time RIC are disposed in a same way as in FIG. 2A(c).

As shown in FIG. 2C, optionally, an access network device includes one or more AI entities, and a function of the AI entity is similar to that of the near-real-time RIC. Optionally, an OAM includes one or more AI entities, and a function of the AI entity is similar to that of the non-real-time RIC. Optionally, a core network device includes one or more AI entities, and a function of the AI entity is similar to that of the non-real-time RIC. When the OAM and the core network device each include an AI entity, models obtained through training by the AI entities of the OAM and the core network device are different, and/or models configured to perform inference are different. In this application, that the models are different includes at least one of the following: structure parameters of the models (for example, quantities of layers and/or weights of the models) are different; input parameters of the models are different; or output parameters of the models are different.

Compared with FIG. 2C, the access network device in FIG. 2D is split into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained through training by the AI entities of the CU and the DU are different, and/or models configured to perform inference are different. Optionally, the CU in FIG. 2D may be further split into a CU-CP and a CU-UP. Optionally, one or more AI models may be deployed in the CU-CP, and/or one or more AI models may be deployed in the CU-UP. Optionally, in FIG. 2C or FIG. 2D, an OAM of the access network device and an OAM of the core network device may be separately and independently deployed.

It should be understood that quantities and types of devices in the communication system shown in FIG. 1 are merely used as an example. This application is not limited thereto. During actual application, the communication system may further include more terminal devices and more access network devices, and may further include another network element, for example, may include a core network device and/or a network element configured to implement an artificial intelligence function.

It may be understood that all or some of functions implemented by one or more of the terminal device, the access network device, the core network device, or the network element configured to implement the artificial intelligence function may be virtualized, that is, implemented by one or more of a dedicated processor or a general-purpose processor and a corresponding software module. Because the terminal device and the access network device are related to an air interface transmission interface, a transceiver function of the interface may be implemented by hardware. Core network devices such as an operation, administration, and maintenance (operation, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

A 5G communication system is used as an example. The 5G communication system imposes higher requirements on system capacity, spectral efficiency, and the like. In the 5G communication system, application of the massive multiple-input multiple-output (massive MIMO) technology is of great importance in improving spectral efficiency of the system. When the multiple-input multiple-output (multiple-input multiple-output, MIMO) technology is used, before sending data to a terminal device, a network device needs to precode the data. However, how to perform precoding depends on downlink channel CSI reported by the terminal device to the network device. Therefore, accurate CSI information is a critical factor that affects system performance.

In a time division duplex (time division duplex, TDD) system, signals on uplink and downlink channels are transmitted on same frequency-domain resources and different time resources. Within relatively short time (coherent time of channel propagation), channel fading experienced by signals on uplink and downlink channels may be considered identical. Therefore, the channels exhibit reciprocity. Due to the channel reciprocity, a base station may obtain CSI of a downlink channel based on an uplink channel, to perform precoding.

In an FDD system, because an interval between uplink and downlink bands is greater than a bandwidth, uplink and downlink channels do not exhibit full reciprocity. In a conventional FDD system, reciprocity of uplink and downlink channels cannot be utilized, and a terminal device needs to report CSI of a downlink channel to a network device. FIG. 3 is a diagram of a basic procedure in which a network device and a terminal device perform CSI estimation. The procedure includes the following steps. S301: The network device needs to first send configuration information for channel measurement to the terminal device. The configuration information is used for channel measurement configuration and notifying the terminal device of channel measurement time and actions, that is, notifying the terminal device of a specific resource on which a channel state information-reference signal (channel state information-reference signal, CSI-RS) is measured. S302: The network device sends a CSI-RS to the terminal device for channel measurement. S303: The terminal device performs measurement based on the CSI-RS sent by the network device, performs calculation to obtain a final CSI report, and reports CSI to the network device. S304: The network device sends data based on the CSI reported by the terminal device. The network device determines, based on a channel rank indicator (rank indicator, RI) reported by the terminal device, a number of data streams transmitted to the terminal device. The network device determines, based on a channel quality indicator (channel quality indicator, CQI) reported by the terminal device, a modulation order for data transmission to the terminal device, and a code rate for channel encoding. The network device determines, based on a PMI reported by the terminal device, precoding for data transmission to the terminal device.

PMI reporting is determined and reported based on a set of codebooks. The design of FDD CSI codebooks is a fundamental and critical issue in 5G communication systems.

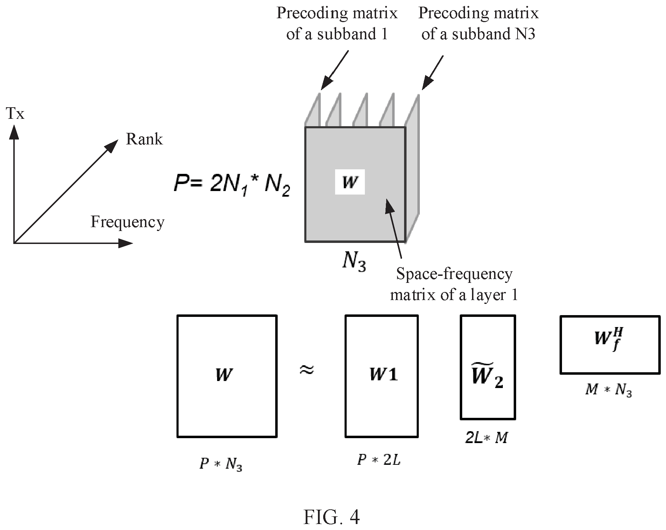

In a current new radio (new radio, NR) standard protocol, for FDD CSI reporting, channel quantization is performed by using base station-side information as a reference, and a PMI reported by UE is determined based on at least one channel principal eigenvector of a base station side as a transmit end. A first type of codebook employs the principle of spatial-domain (angular) compression, which represents a plurality of principal eigenvectors (that is, a precoding matrix for a single user) by a linear combination of several discrete Fourier transform (discrete Fourier transform, DFT) basis vectors in spatial domain. Based on the first type of codebook, a second type of codebook employs frequency-domain correlation of amplitudes and phase coefficients of different subbands to further perform frequency-domain (delay) compression, which represents principal eigenvectors by a bilinear combination of several spatial-domain DFT basis vectors and several frequency-domain DFT basis vectors. FIG. 4 is a diagram of a structure of an existing PMI codebook of type II (Type II) in the NR standard protocol release 16 (R16). A codebook structure of the second type of codebook is $W = {W}_{1} {{W}^{˜}}_{2} {W}_{f}^{H}$. A PMI indicates precoding for one or more transport layers on a plurality of frequency-domain units, where a quantity R of transport layers is determined based on a value reported by an RI; and the frequency-domain unit may be a quantity of subbands or may be a quantity of resource blocks (resource block, RB). W in the codebook structure is a precoding matrix in space-frequency dimensions formed by concatenating to-be-reported precoding vectors (each of dimensions P×1) of N₃ frequency-domain units corresponding to each of R transport layers, resulting in dimensions of P×N₃, and P is a quantity of ports on a base station side. In consideration of dual polarization, P = 2N₁*N₂, where N₁ and N₂ are respectively a quantity of horizontal ports and a quantity of vertical ports, and N₃ is a quantity of frequency-domain units. W₁ is a selected spatial-domain DFT basis vector set, and ${W}_{1} = \left[\begin{matrix}{v}_{0} {v}_{1} … {v}_{L - 1} & 0 \\ 0 & {v}_{0} {v}_{1} … {v}_{L - 1}\end{matrix}\right]$, where ${\left\{{v}_{i}\right\}}_{i = 0}^{L - 1}$ is L orthogonal DFT basis vectors, each of dimensions N₁*N₂×1, corresponding to the dual polarization. ${W}_{f}^{H}$ is a conjugate transpose matrix of *W_{f},* and *W_{f}* = [*f*_{*k*₀} *f*_{*k*₁} ... *f*_{*k_{M-}*1}] is a selected frequency-domain DFT basis vector set, where ${\left\{{f}_{{k}_{m}}\right\}}_{m = 0}^{M - 1}$ is M orthogonal DFT basis vectors, each of dimensions N₃×1. *W̃*₂ is 2LM linear combination coefficients corresponding to 2L spatial-domain basis vectors and M frequency-domain basis vectors. The UE only needs to select several non-zero coefficients for reporting, and the non-zero coefficients that need to be reported are indicated by a bitmap (bitmap). A PMI report of the UE includes indication information of spatial-domain basis vectors, indication information of frequency-domain basis vectors, indication information of amplitudes and phases of non-zero linear combination coefficients, and a bitmap indicating positions of non-zero coefficients. The base station constructs the precoding matrix based on the report of the UE.

The UE reports the corresponding PMI in real time according to the foregoing codebook based on channel characteristics obtained currently through measurement, resulting in high reporting overheads. The inventors have discovered that spatial-domain characteristics of channels vary slowly within a period of time. How to reduce CSI reporting overheads based on the slow-varying characteristic of channels in spatial domain is a problem worth studying.

For the problem of high CSI reporting overheads, this application provides a CSI reporting solution. A terminal device determines some spatial-domain basis vectors based on a historical measurement result, and only needs to report indication information of the remaining spatial-domain basis vectors corresponding to a precoding matrix, so that a network device can construct the precoding matrix based on the indication information of the spatial-domain basis vectors reported by the terminal device and the some spatial-domain basis vectors determined based on the historical measurement result. In consideration of a slow-varying characteristic of a channel in spatial domain, the some spatial-domain basis vectors determined based on the historical measurement result can well reflect spatial-domain characteristics of the to-be-reported precoding matrix, and only a small quantity of additional spatial-domain basis vectors need to be indicated to refine a spatial-domain beam direction, thereby reducing overheads for reporting channel state information.

The following describes in detail a channel state information reporting method provided in embodiments of this application with reference to the accompanying drawings.

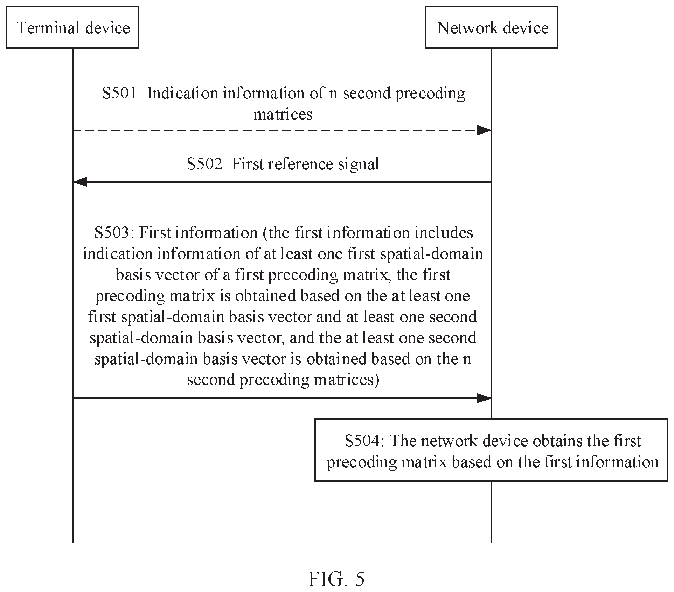

FIG. 5 is a schematic flowchart of a channel state information reporting method according to an embodiment of this application. For example, the method may include the following steps.

S501: A terminal device sends indication information of n second precoding matrices separately based on second reference signals in n receptions. Correspondingly, a network device receives the indication information of the n second precoding matrices.

The network device may send reference signals to the terminal device periodically or based on event triggering. The terminal device measures the reference signal sent by the network device each time, generates the indication information of the second precoding matrix, and reports the indication information of the second precoding matrix to the network device.

In this embodiment, the network device sends n second reference signals, and the terminal device sends the indication information of the n second precoding matrices to the network device. Herein, n is a positive integer greater than or equal to 1.

For example, the terminal device may send the indication information of the n second precoding matrices in an existing manner (for example, based on the first type of codebook or the second type of codebook mentioned above). To be specific, the indication information of each second precoding matrix includes indication information that represents all spatial-domain basis vectors corresponding to the second precoding matrix. Alternatively, the terminal device may send the indication information of the n second precoding matrices based on the solution of this application. To be specific, for each second precoding matrix, a corresponding spatial-domain basis vector set for representing the second precoding matrix includes two parts of spatial-domain basis vectors. One part of the spatial-domain basis vectors is determined based on precoding matrices obtained through several times of measurement before measurement corresponding to the second precoding matrix, and the other part of the spatial-domain basis vectors is selected from a predefined spatial-domain basis vector set. In this case, only indication information of the other part of the spatial-domain basis vectors is sent.

This embodiment of this application primarily describes reporting of spatial-domain channel state information. In practice, the indication information of the second precoding matrix may further include indication information of frequency-domain basis vectors, indication information of amplitudes and phases of non-zero linear combination coefficients, and a bitmap indicating positions of non-zero coefficients.

It may be understood that the network device may alternatively obtain the indication information of the n second precoding matrices in another manner. Therefore, this step is optional and is represented by a dashed line in the figure.

For example, the second reference signal may be a channel state information-reference signal (channel state information-reference signal, CSI-RS), or may be a demodulation reference signal (demodulation reference signal, DMRS). A type of the second reference signal is not limited in embodiments of this application.

S502: The network device sends a first reference signal to the terminal device. Correspondingly, the terminal device receives the first reference signal.

In step S501, that the network device sends n second reference signals to the terminal device is a historical action relative to this step, and is an action performed temporally prior to current CSI measurement and reporting.

In this step, the network device may further send the first reference signal to the terminal device. The first reference signal may be the same as or different from the second reference signals sent by the network device in step S501.

S503: The terminal device sends first information to the network device based on the first reference signal. Correspondingly, the network device receives the first information.

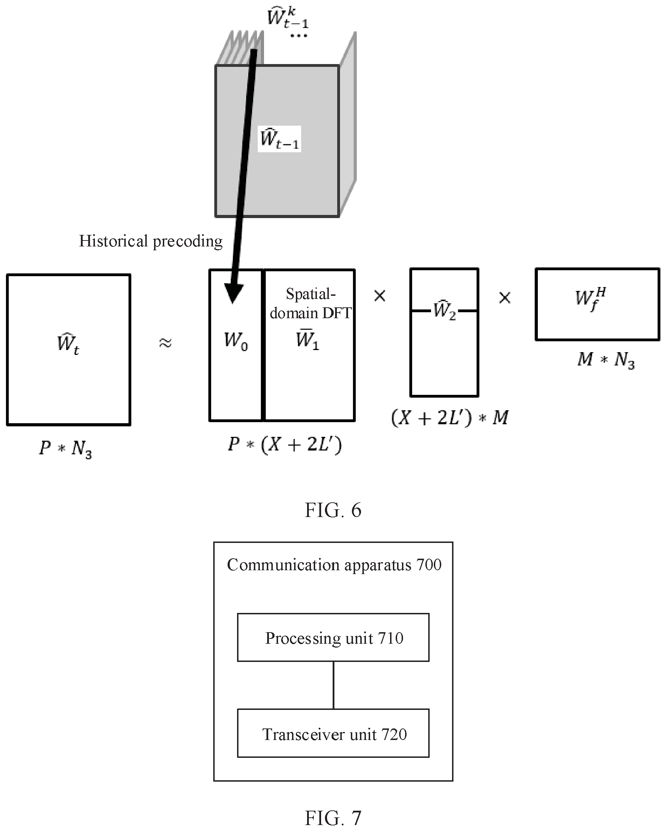

After receiving the first reference signal, the terminal device measures the first reference signal, and determines, based on a measurement result and a codebook structure shown in FIG. 6, a first precoding matrix: ${\hat{W}}_{t} = {W}_{S} {{W}^{˜}}_{2} {W}_{f}^{H}$.

Herein, *Ŵₜ* is a precoding matrix in space-frequency dimensions in this measurement (the t^{th} measurement). Dimensions of the precoding matrix are P*N₃. To be specific, N₃ precoding vectors, each of dimensions P*1, are concatenated into a space-frequency matrix form. For example, *t* ≥ *n* + 1.

*W_{S}* = [*W*₀ *W̅*₁]. *W_{S}* is a spatial-domain basis vector set for determining the first precoding matrix, and *W_{S}* includes two parts. *W*₀ includes at least one second spatial-domain basis vector of dimensions P*X, including X second spatial-domain basis vectors, and is obtained based on precoding vectors corresponding to X transport layers on a first frequency-domain unit in the n second precoding matrices obtained through historical measurement and reporting. *W̅*₁ is 2*L*' first spatial-domain basis vectors (same *L'* first spatial-domain basis vectors in each of two polarization directions) selected from a preconfigured or predefined spatial-domain basis vector set, and is determined based on this measurement. It should be understood that, if there is only one polarization direction, 2*L'* is replaced with *L'* below.

*W̃*₂ is (*X* + 2*L'*)M linear combination coefficients corresponding to (*X* + 2*L'*) spatial-domain basis vectors and M frequency-domain basis vectors. The terminal device only needs to select several non-zero coefficients for reporting, and the non-zero coefficients that need to be reported are indicated by a bitmap.${W}_{f}^{H}$ is a conjugate transpose matrix of *W_{f}*, and *W_{f} =* [*f*_{*k*₀} *f*_{*k*₁} ... *f*_{*k_{M}*-1}] is a selected frequency-domain DFT basis vector set, where ${\left\{{f}_{{k}_{m}}\right\}}_{m = 0}^{M - 1}$ is M orthogonal DFT basis vectors, each of dimensions N3×1.

In this embodiment, the terminal device sends the first information to the network device. The first information includes indication information of at least one first spatial-domain basis vector corresponding to the first precoding matrix, that is, indication information of the selected 2*L'* spatial-domain DFT basis vectors. For example, the first information may include indexes of the selected same *L'* spatial-domain DFT basis vectors corresponding to two polarization directions.

In this embodiment, a protocol needs to specify the design of spatial-domain basis vectors, or both the network device and the terminal device need to negotiate the design of spatial-domain basis vectors, so that at least one second spatial-domain basis vector for representing the first precoding matrix can be determined based on the n second precoding matrices obtained through historical measurement. For example, *W*₀ is obtained based on precoding vectors respectively corresponding to X transport layers on a first frequency-domain unit in the n second precoding matrices.

Further, *W*₀ may be obtained through the following implementations.

In an implementation, n = 1, and *W*₀ is obtained based on precoding vectors corresponding to X transport layers on a first frequency-domain unit in a second precoding matrix obtained through previous measurement.

The first frequency-domain unit is k same frequency-domain units corresponding to the second precoding matrix obtained through the previous measurement (the (t-1)^{th} measurement). Each of the second precoding matrices obtained through the previous measurement corresponds to K frequency-domain units, and 1 ≤ k ≤ K.

For example, based on the second precoding matrix obtained through the previous measurement, precoding vectors corresponding to the first X transport layers on one frequency-domain unit (which may be any one of the K frequency-domain units, for example, a j^{th} frequency-domain unit, 1 ≤ j ≤ K) may be extracted as *W*₀, and *W*₀ satisfies the following Formula 1: ${W}_{0} = {\hat{W}}_{t - 1}^{j} \left(:,1:X\right)$

Herein, ${\hat{W}}_{t - 1}^{j}$ represents a precoding matrix formed by precoding vectors corresponding to *R*_{*t*-1} transport layers on the j^{th} frequency-domain unit, and is of dimensions P *

*R*_{*t*-1}; and ${\hat{W}}_{t - 1}^{j} \left(:,1:X\right)$ indicates that the first X column vectors of the matrix are selected.

In another example, based on the second precoding matrix obtained through the previous measurement, an average of precoding vectors corresponding to the first X transport layers on k frequency-domain units may be extracted as *W*₀, and *W*₀ satisfies the following Formula 2: ${W}_{0} = \frac{1}{k} {\sum }_{j ∈ K} {\hat{W}}_{t - 1}^{j} \left(:,1:X\right)$

Herein, k may be predefined in a protocol, or configured by the network device, or reported by the terminal device.

Herein, represents a set of indexes of the k frequency-domain units extracted from the K frequency-domain units. Which k frequency-domain units are extracted from the K frequency-domain units may be predefined in a protocol, or configured by the network device, or reported by the terminal device.

Herein, X may be predefined in a protocol, or configured by the network device, or reported by the terminal device.

For example, if X is predefined in a protocol, X is equal to the quantity *R*_{*t*-1} of transport layers corresponding to the second precoding matrix obtained through the previous measurement.

For example, if X is configured by the network device or reported by the terminal device, X is less than or equal to the quantity *R*_{*t*-1} of transport layers corresponding to the second precoding matrix obtained through the previous measurement.

In this implementation, the at least one second spatial-domain basis vector may be extracted from precoding vectors corresponding to X transport layers on a first frequency-domain unit in a second precoding matrix obtained through previous measurement and reporting.

In another implementation, n is greater than 1, *W*₀ is obtained based on an average of precoding vectors corresponding to X transport layers on a first frequency-domain unit in the n second precoding matrices, and *W*₀ satisfies the following Formula 3: ${W}_{0} = \frac{1}{nk} {\sum }_{i = 1}^{n} {\sum }_{j ∈ K} {\hat{W}}_{t - i}^{j} \left(:,1:X\right)$

Herein, ${\hat{W}}_{t - i}^{j}$ represents a precoding matrix formed by precoding vectors corresponding to *Rₜ₋ᵢ* transport layers on the j^{th} frequency-domain unit, and is of dimensions P * *R*_{*t*-*i*}.

The first frequency-domain unit is k same frequency-domain units corresponding to the second precoding matrix obtained through the previous measurement (the (t-1)^{th} measurement). Each of the second precoding matrices obtained through the previous measurement corresponds to K frequency-domain units, and 1 ≤ k ≤ K.

In Formula 3, a precoding vector corresponding to X transport layers on the first frequency-domain unit in each of the n second precoding matrices is first obtained, and then the average of the n precoding vectors is obtained.

Herein, a value of n may be predefined in a protocol, or configured by the network device, or reported by the terminal device.

Herein, k may be predefined in a protocol, or configured by the network device, or reported by the terminal device.

Herein, represents a set of indexes of the k frequency-domain units extracted from the K frequency-domain units. Which k frequency-domain units are extracted from the K frequency-domain units may be predefined in a protocol, or configured by the network device, or reported by the terminal device.

Herein, X may be predefined in a protocol, or configured by the network device, or reported by the terminal device.

For example, if X is predefined in a protocol, X is equal to a minimum of quantities of transport layers corresponding to the n second precoding matrices, that is, X = *min*{R*ₜ₋ᵢ*|*i* = 1, ..., *n*}.

For example, if X is configured by the network device or reported by the terminal device, X is less than or equal to a minimum of quantities of transport layers corresponding to the n second precoding matrices, that is, X ≤ *min*{*Rₜ₋ᵢ*|*i* = 1, ...,*n*}.

In this implementation, the at least one second spatial-domain basis vector is extracted from the average of the precoding vectors corresponding to the X transport layers on the first frequency-domain unit in the n second precoding matrices, so that precision of the first precoding matrix can be improved with limited overheads, or reporting overheads can be reduced with same reporting precision.

In still another implementation, n is greater than 1, *W*₀ is obtained based on a singular value decomposition (singular value decomposition, SVD) result of a covariance matrix *R̅_{WW}* obtained from precoding vectors corresponding to X transport layers on a first frequency-domain unit in the n second precoding matrices, *W*₀ is the first X column vectors corresponding to a right unitary matrix obtained through the decomposition of the covariance matrix *R̅_{WW}*, and *R̅_{WW}* satisfies the following Formula 4: ${\overline{R}}_{WW} = \frac{1}{nk} {\sum }_{i = 1}^{n} {\sum }_{j ∈ K} {\hat{W}}_{t - i}^{j} \left(:,1:X\right) {\left({\hat{W}}_{t - i}^{j}\left(:,1:X\right)\right)}^{H}$

Herein, ${\hat{W}}_{t - i}^{j}$represents a precoding matrix formed by precoding vectors corresponding to R*ₜ₋ᵢ* transport layers on a k^{th} frequency-domain unit, and is of dimensions P * *R*_{*t*-*i*}. ${\left({\hat{W}}_{t - i}^{j}\right)}^{H}$ is a conjugate transpose matrix of ${\hat{W}}_{t - i}^{j}$.

The first frequency-domain unit is k same frequency-domain units corresponding to the second precoding matrix obtained through the previous measurement (the (t-1)^{th} measurement). Each of the second precoding matrices obtained through the previous measurement corresponds to K frequency-domain units, and 1 ≤ k ≤ K.

Herein, a value of n may be predefined in a protocol, or configured by the network device, or reported by the terminal device.

Herein, k may be predefined in a protocol, or configured by the network device, or reported by the terminal device.

Herein, 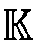 represents a set of indexes of the k frequency-domain units extracted from the K frequency-domain units. Which k frequency-domain units are extracted from the K frequency-domain units may be predefined in a protocol, or configured by the network device, or reported by the terminal device.

Herein, X may be predefined in a protocol, or configured by the network device, or reported by the terminal device.

For example, if X is predefined in a protocol, X is equal to a minimum of quantities of transport layers corresponding to the n second precoding matrices, that is, X = *min*{R*ₜ₋ᵢ*|*i* = 1, ..., *n*}.

For example, if X is configured by the network device or reported by the terminal device, X is less than or equal to a minimum of quantities of transport layers corresponding to the n second precoding matrices, that is, X ≤ *min*{R_{*t*-*i*}|*i* = 1, ...,*n*}.

In this implementation, the at least one second spatial-domain basis vector is extracted from the singular value decomposition value of the covariance matrix obtained from the precoding vectors corresponding to the X transport layers on the first frequency-domain unit in the n second precoding matrices, so that precision of the first precoding matrix can be improved.

It can be learned that this embodiment provides a spatial-domain differential CSI reporting solution, in which at least one spatial-domain basis vector (*W*₀) determined based on the n second precoding matrices is used as a part of a spatial-domain basis, and is combined with several selected DFT basis vectors (which are 2*L'* spatial-domain DFT basis vectors herein) to form the spatial-domain basis for spatial-domain compression. Therefore, it may be understood that the first precoding matrix is obtained based on at least one first spatial-domain basis vector and at least one second spatial-domain basis vector.

It may be understood that both the at least one first spatial-domain basis vector and the at least one second spatial-domain basis vector are used for representing spatial-domain characteristics of the first precoding matrix. It may be understood that the at least one first spatial-domain basis vector is used for refining a spatial-domain beam direction of the at least one second spatial-domain basis vector, so that a spatial-domain basis vector set formed by the at least one first spatial-domain basis vector and the at least one second spatial-domain basis vector can better represent the spatial-domain characteristics of the first precoding matrix with the smallest quantity of spatial-domain basis vectors.

To further reduce reporting overheads, the first precoding matrix may be obtained based on an orthogonalization (orthogonalize) result of the at least one first spatial-domain basis vector and the at least one second spatial-domain basis vector, that is, *W_{S}* = orthogonalize([*W*₀ *W̅*₁]). An orthogonalization method is not limited in this application. For example, the Gram-Schmidt orthogonalization method or Householder transformation may be used to perform an orthogonalization operation on basis vectors. In this implementation, the at least one first spatial-domain basis vector and the at least one second spatial-domain basis vector are orthogonalized, so that a spatial-domain basis vector set obtained after the orthogonalization can more accurately represent the spatial-domain characteristics of the first spatial-domain basis vector with the smallest quantity of spatial-domain basis vectors. In this way, precision of the first precoding matrix can be improved with limited overheads, or reporting overheads can be reduced with same reporting precision.

This embodiment of this application primarily describes reporting of spatial-domain channel state information. In practice, the first information may further include indication information of frequency-domain basis vectors ( ${W}_{f}^{H}$), indication information of amplitudes and phases of non-zero linear combination coefficients (*W̃*₂), and a bitmap indicating positions of non-zero coefficients.

S504: The network device obtains the first precoding matrix based on the first information.

After receiving the first information, the network device may obtain the indication information of the at least one first spatial-domain basis vector of the first precoding matrix through parsing. In addition, the network device may obtain the at least one second spatial-domain basis vector based on the indication information of the n second precoding matrices received in step S501. Then, the network device constructs the first precoding matrix based on the at least one first spatial-domain basis vector and the at least one second spatial-domain basis vector.

The network device may obtain the at least one second spatial-domain basis vector based on the indication information of the n second precoding matrices in a manner same as the manner in which the terminal device obtains the at least one second spatial-domain basis vector.

It should be noted that, if the first precoding matrix may be obtained based on an orthogonalization result of the at least one first spatial-domain basis vector and the at least one second spatial-domain basis vector, after obtaining the at least one first spatial-domain basis vector and the at least one second spatial-domain basis vector, the network device first performs orthogonalization on the at least one first spatial-domain basis vector and the at least one second spatial-domain basis vector, then obtains *W_{S}*, and finally constructs the first precoding matrix based on *W_{S}*.

Therefore, the network device may perform data transmission with the terminal device based on the first precoding matrix.

In this embodiment, the terminal device and the network device obtain the at least one second spatial-domain basis vector in a same manner and construct the spatial-domain basis in a same manner. Therefore, the network device may construct the first precoding matrix after receiving the indication information of the at least one first spatial-domain basis vector of the first precoding matrix, as reported by the terminal device.

According to the channel state information reporting method provided in embodiments of this application, the terminal device determines some spatial-domain basis vectors based on a historical measurement result, and only needs to report indication information of the remaining spatial-domain basis vectors corresponding to a precoding matrix, so that the network device can construct the precoding matrix based on the indication information of the spatial-domain basis vectors reported by the terminal device and the some spatial-domain basis vectors determined based on the historical measurement result. In consideration of a slow-varying characteristic of a channel in spatial domain, the some spatial-domain basis vectors determined based on the historical measurement result can well reflect spatial-domain characteristics of the to-be-reported precoding matrix, and only a small quantity of additional spatial-domain basis vectors need to be indicated to refine a spatial-domain beam direction, thereby reducing overheads for reporting channel state information.

In this application, "sending information to...(for example, a terminal device)" or a related description in the accompanying drawings may be understood as that a destination of the information is the terminal device, and may include directly or indirectly sending the information to the terminal device. "Receiving information from...(for example, a terminal device)", or "receiving information from...(a terminal device)", or a related description in the accompanying drawings may be understood as that a source of the information is the terminal device, and may include directly or indirectly receiving the information from the terminal device. The information may undergo necessary processing, for example, a format change, between the source for sending the information and the destination. However, the destination may understand valid information from the source. Similar descriptions in this application may be understood similarly, and details are not described herein again.

It may be understood that, in this application, an example in which a terminal device and a network device are used as execution entities for the interaction example is used for description. However, the execution entities for the interaction example are not limited in this application. For example, the terminal device in the method provided in this application may be a chip, a chip system, or a processor that is used in the terminal device, or may be a logical node, a logical module, or software that can implement all or a part of the terminal device. The network device in the method provided in this application may be a chip, a chip system, or a processor that is used in the network device, or may be a logical node, a logical module, or software that can implement all or some functions of the network device.

It may be understood that, to implement functions in the foregoing embodiments, the network device and the terminal device include corresponding hardware structures and/or software modules for performing the functions. A person skilled in the art should easily be aware that, in combination with the units and method steps of the examples described in embodiments disclosed in this application, this application can be implemented by hardware or a combination of hardware and computer software. Whether a function is performed by hardware or hardware driven by computer software depends on particular application scenarios and design constraints of the technical solutions.

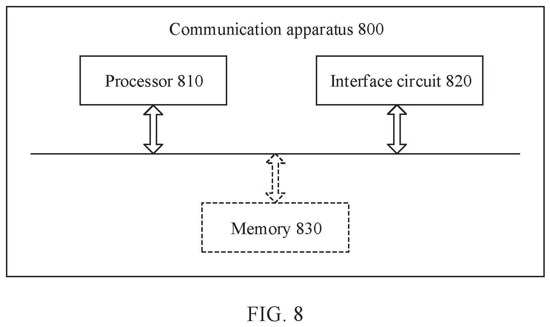

FIG. 7 and FIG. 8 are diagrams of possible structures of communication apparatuses according to embodiments of this application. These communication apparatuses may be configured to implement functions of the terminal device or the network device in the foregoing method embodiments. Therefore, beneficial effects of the foregoing method embodiments can also be achieved. In embodiments of this application, the communication apparatus may be one of the terminal devices 120a to 120j shown in FIG. 1, or may be the network device 110a or 110b shown in FIG. 1, or may be a module (for example, a chip) used in the terminal device or the network device.

As shown in FIG. 7, a communication apparatus 700 includes a processing unit 710 and a transceiver unit 720. The communication apparatus 700 is configured to implement the functions of the terminal device or the network device in the method embodiment shown in FIG. 5.

When the communication apparatus 700 is configured to implement the functions of the terminal device in the method embodiment shown in FIG. 5, the transceiver unit 720 is configured to implement the functions of the terminal device in steps S501 to S503 in the embodiment shown in FIG. 5.

When the communication apparatus 700 is configured to implement the functions of the network device in the method embodiment shown in FIG. 5, the transceiver unit 720 is configured to implement the functions of the network device in steps S501 to S503 in the embodiment shown in FIG. 5, and the processing unit 710 is configured to implement step S504 in the embodiment shown in FIG. 5. For example, the transceiver unit 720 may be deployed on the DU or the RU in FIG. 2A(a) to FIG. 2A(c) or FIG. 2B, and the processing unit 710 may be deployed on the DU in FIG. 2A(a) to FIG. 2A(c) or FIG. 2B. Alternatively, for the processing unit 710, some functions are deployed on the DU and some functions are deployed on the CU in FIG. 2A(a) to FIG. 2A(c) or FIG. 2B. In another example, both the transceiver unit 720 and the processing unit 710 may be deployed on the DU in FIG. 2D.

For more detailed descriptions of the processing unit 710 and the transceiver unit 720, directly refer to related descriptions in the method embodiment shown in FIG. 5. Details are not described herein again.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

As shown in FIG. 8, a communication apparatus 800 includes a processor 810, and may further include an interface circuit 820. The processor 810 and the interface circuit 820 are coupled to each other. It may be understood that the interface circuit 820 may be a transceiver or an input/output interface. Optionally, the communication apparatus 800 may further include a memory 830 (represented by a dashed line in the figure) configured to: store instructions executed by the processor 810, or store input data required by the processor 810 to run the instructions, or store data generated after the processor 810 runs the instructions.

When the communication apparatus 800 is configured to implement the functions of the terminal device in the method embodiment shown in FIG. 5, the interface circuit 820 is configured to implement the functions of the terminal device in steps S501 to S503 in the embodiment shown in FIG. 5.

When the communication apparatus 800 is configured to implement the functions of the network device in the method embodiment shown in FIG. 5, the interface circuit 820 is configured to implement the functions of the network device in steps S501 to S503 in the embodiment shown in FIG. 5, and the processor 810 is configured to implement step S504 in the embodiment shown in FIG. 5.

For more detailed descriptions of the processor 810 and the interface circuit 820, directly refer to related descriptions in the method embodiment shown in FIG. 5. Details are not described herein again.

In this application, division into modules is an example, and is merely logical function division. During actual implementation, another division manner may be used. In addition, functional modules in examples of this application may be integrated into one processor, or each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is enabled to perform the method in the foregoing embodiments.

An embodiment of this application further provides a communication system, including the foregoing communication apparatus.

An embodiment of this application further provides a circuit. The circuit is coupled to a memory. The circuit is configured to perform the method in the foregoing embodiments. The circuit may include a chip circuit.

When the communication apparatus is a module used in a network device, the module in the network device implements functions of the network device in the foregoing method embodiments. The module in the network device receives information from another module (for example, a radio frequency module or an antenna) in the network device, where the information is sent by UE to the network device. Alternatively, the module in the network device sends information to another module (for example, a radio frequency module or an antenna) in the network device, where the information is sent by the network device to UE. The module in the network device herein may be a baseband chip of the network device, or may be a CU, a DU, or another module, or may be an apparatus in an open radio access network (open radio access network, O-RAN) architecture, for example, an apparatus like an open CU or an open DU.

It should be noted that one or more of the foregoing units or units may be implemented by software, hardware, or a combination of software and hardware. When any one of the foregoing units or units is implemented by software, the software exists in a form of computer program instructions, and is stored in the memory. The processor may be configured to execute the program instructions and implement the foregoing method procedures.

In this application, the processor may be a general-purpose processor, a digital signal processor, an application-specific integrated circuit, a field programmable gate array or another programmable logic device, a discrete gate or a transistor logic device, a discrete hardware component, or all or some of circuits configured to implement a processing function in the foregoing devices, and may implement or perform the methods, steps, and logical block diagrams disclosed in this application. The general-purpose processor may be a microprocessor or any conventional processor. The steps of the method disclosed with reference to this application may be directly performed by a hardware processor, or may be performed by a combination of hardware in a processor and a software module.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is enabled to perform the method in any one of the foregoing method embodiments. Optionally, the chip system may include a chip, or may include a chip and another discrete device. This is not specifically limited in embodiments of this application.

The memory in this application may alternatively be a circuit or any other apparatus that can implement a storage function, and is configured to store program instructions and/or data. The memory is any other medium that can carry or store expected program code in a form of an instruction or data structure and that can be accessed by a computer, but is not limited thereto. For example, the memory may be a non-volatile memory such as a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions and effects. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

All or some of the foregoing embodiments may be implemented by using software, hardware, firmware, or any combination thereof. When implemented by using a software program, all or some of the foregoing embodiments may be implemented in a form of a computer program product. The computer program product includes one or more computer instructions. When the computer program instructions are loaded and executed on a computer, all or some of the procedure or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce great effects.

It may be understood that various numbers in embodiments of this application are merely used for differentiation for ease of description, and are not used to limit the scope of embodiments of this application. Sequence numbers of the foregoing processes do not mean a sequence of performing the processes, and the sequence of performing the processes should be determined based on functions and internal logic of the processes.

In the foregoing embodiments, descriptions of embodiments have respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments and features of different embodiments described in this specification.

In this application, without a logical contradiction, mutual reference can be made between examples. For example, mutual reference can be made between methods and/or terms in the method embodiments, mutual reference can be made between functions and/or terms in the apparatus embodiments, and mutual reference can be made between functions and/or terms in the apparatus examples and the method examples.

## Claims

1. A channel state information reporting method, wherein the method comprises:
receiving a first reference signal; and
sending first information based on the first reference signal, wherein the first information comprises indication information of at least one first spatial-domain basis vector corresponding to a first precoding matrix, the first precoding matrix is obtained based on the at least one first spatial-domain basis vector and at least one second spatial-domain basis vector, the at least one second spatial-domain basis vector is obtained based on n second precoding matrices, and n is a positive integer greater than or equal to 1.

2. The method according to claim 1, wherein before receiving the first reference signal, the method further comprises:
receiving n second reference signals; and
sending indication information of the n second precoding matrices separately based on the second reference signals in the n receptions.

3. The method according to claim 1 or 2, wherein the at least one second spatial-domain basis vector is obtained based on precoding vectors corresponding to X transport layers on a first frequency-domain unit in the n second precoding matrices.

4. The method according to claim 3, wherein n = 1, and X is less than or equal to a quantity of transport layers corresponding to the second precoding matrix.

5. The method according to claim 3, wherein n is greater than 1, and the at least one second spatial-domain basis vector is obtained based on an average of the precoding vectors corresponding to the X transport layers on the first frequency-domain unit in the n second precoding matrices.

6. The method according to claim 3, wherein n is greater than 1, and the at least one second spatial-domain basis vector is obtained based on a singular value decomposition value of a covariance matrix obtained from the precoding vectors corresponding to the X transport layers on the first frequency-domain unit in the n second precoding matrices.

7. The method according to claim 5 or 6, wherein X is less than or equal to a minimum of quantities of transport layers corresponding to the n second precoding matrices.

8. The method according to any one of claims 3 to 7, wherein the first frequency-domain unit is k same frequency-domain units corresponding to the n second precoding matrices, each of the n second precoding matrices corresponds to K frequency-domain units, and 1 ≤ k ≤ K.

9. The method according to any one of claims 1 to 8, wherein that the first precoding matrix is obtained based on the at least one first spatial-domain basis vector and the at least one second spatial-domain basis vector comprises:
the first precoding matrix is obtained based on an orthogonalization result of the at least one first spatial-domain basis vector and the at least one second spatial-domain basis vector.

10. A channel state information reporting method, wherein the method comprises:
sending a first reference signal;
receiving first information, wherein the first information comprises indication information of at least one first spatial-domain basis vector corresponding to a first precoding matrix, the first precoding matrix is obtained based on the at least one first spatial-domain basis vector and at least one second spatial-domain basis vector, the at least one second spatial-domain basis vector is obtained based on n second precoding matrices, and n is a positive integer greater than or equal to 1; and
obtaining the first precoding matrix based on the first information.

11. The method according to claim 10, wherein before sending the first reference signal, the method further comprises:
sending n second reference signals; and
receiving indication information of the n second precoding matrices separately based on the n second reference signals.

12. The method according to claim 10 or 11, wherein the at least one second spatial-domain basis vector is obtained based on precoding vectors corresponding to X transport layers on a first frequency-domain unit in the n second precoding matrices.

13. The method according to claim 12, wherein n = 1, and X is less than or equal to a quantity of transport layers corresponding to the second precoding matrix.

14. The method according to claim 12, wherein n is greater than 1, and the at least one second spatial-domain basis vector is obtained based on an average of the precoding vectors corresponding to the X transport layers on the first frequency-domain unit in the n second precoding matrices.

15. The method according to claim 12, wherein n is greater than 1, and the at least one second spatial-domain basis vector is obtained based on a singular value decomposition value of a covariance matrix obtained from the precoding vectors corresponding to the X transport layers on the first frequency-domain unit in the n second precoding matrices.

16. The method according to claim 14 or 15, wherein X is less than or equal to a minimum of quantities of transport layers corresponding to the n second precoding matrices.

17. The method according to any one of claims 12 to 16, wherein the first frequency-domain unit is k same frequency-domain units corresponding to the n second precoding matrices, each of the n second precoding matrices corresponds to K frequency-domain units, and 1 ≤ k ≤ K.

18. The method according to any one of claims 10 to 17, wherein that the first precoding matrix is obtained based on the at least one first spatial-domain basis vector and the at least one second spatial-domain basis vector comprises:
the first precoding matrix is obtained based on an orthogonalization result of the at least one first spatial-domain basis vector and the at least one second spatial-domain basis vector.

19. The method according to any one of claims 11 to 18, wherein obtaining the first precoding matrix based on the first information comprises:
obtaining the at least one second spatial-domain basis vector based on the indication information of the n second precoding matrices; and
obtaining the first precoding matrix based on the at least one first spatial-domain basis vector and the at least one second spatial-domain basis vector.

20. A communication apparatus, wherein the apparatus comprises a transceiver unit and a processing unit, wherein
the transceiver unit is configured to receive a first reference signal;
the processing unit is configured to generate first information based on the first reference signal, wherein the first information comprises indication information of at least one first spatial-domain basis vector corresponding to a first precoding matrix, the first precoding matrix is obtained based on the at least one first spatial-domain basis vector and at least one second spatial-domain basis vector, the at least one second spatial-domain basis vector is obtained based on n second precoding matrices, and n is a positive integer greater than or equal to 1; and
the transceiver unit is further configured to send the first information.

21. The apparatus according to claim 20, wherein the transceiver unit is further configured to perform n receptions of second reference signals before receiving the first reference signal; and the transceiver unit is further configured to send indication information of the n second precoding matrices separately based on the second reference signals in the n receptions.

22. The apparatus according to claim 20 or 21, wherein the at least one second spatial-domain basis vector is obtained based on precoding vectors corresponding to X transport layers on a first frequency-domain unit in the n second precoding matrices.

23. The apparatus according to claim 22, wherein n = 1, and X is less than or equal to a quantity of transport layers corresponding to the second precoding matrix.

24. The apparatus according to claim 22, wherein n is greater than 1, and the at least one second spatial-domain basis vector is obtained based on an average of the precoding vectors corresponding to the X transport layers on the first frequency-domain unit in the n second precoding matrices.

25. The apparatus according to claim 22, wherein n is greater than 1, and the at least one second spatial-domain basis vector is obtained based on a singular value decomposition value of a covariance matrix obtained from the precoding vectors corresponding to the X transport layers on the first frequency-domain unit in the n second precoding matrices.

26. The apparatus according to claim 24 or 25, wherein X is less than or equal to a minimum of quantities of transport layers corresponding to the n second precoding matrices.

27. The apparatus according to any one of claims 22 to 26, wherein the first frequency-domain unit is k same frequency-domain units corresponding to the n second precoding matrices, each of the n second precoding matrices corresponds to K frequency-domain units, and 1 ≤ k ≤ K.

28. The apparatus according to any one of claims 20 to 27, wherein that the first precoding matrix is obtained based on the at least one first spatial-domain basis vector and the at least one second spatial-domain basis vector comprises:
the first precoding matrix is obtained based on an orthogonalization result of the at least one first spatial-domain basis vector and the at least one second spatial-domain basis vector.

29. A communication apparatus, wherein the apparatus comprises a transceiver unit and a processing unit, wherein
the transceiver unit is configured to send a first reference signal;
the transceiver unit is further configured to receive first information, wherein the first information comprises indication information of at least one first spatial-domain basis vector corresponding to a first precoding matrix, the first precoding matrix is obtained based on the at least one first spatial-domain basis vector and at least one second spatial-domain basis vector, the at least one second spatial-domain basis vector is obtained based on n second precoding matrices, and n is a positive integer greater than or equal to 1; and
the processing unit is configured to obtain the first precoding matrix based on the first information.

30. The apparatus according to claim 29, wherein the transceiver unit is further configured to sending n second reference signals before sending the first reference signal; and the transceiver unit is further configured to receive indication information of the n second precoding matrices separately based on the n second reference signals.

31. The apparatus according to claim 29 or 30, wherein the at least one second spatial-domain basis vector is obtained based on precoding vectors corresponding to X transport layers on a first frequency-domain unit in the n second precoding matrices.

32. The apparatus according to claim 31, wherein n = 1, and X is less than or equal to a quantity of transport layers corresponding to the second precoding matrix.

33. The apparatus according to claim 31, wherein n is greater than 1, and the at least one second spatial-domain basis vector is obtained based on an average of the precoding vectors corresponding to the X transport layers on the first frequency-domain unit in the n second precoding matrices.

34. The apparatus according to claim 31, wherein n is greater than 1, and the at least one second spatial-domain basis vector is obtained based on a singular value decomposition value of a covariance matrix obtained from the precoding vectors corresponding to the X transport layers on the first frequency-domain unit in the n second precoding matrices.

35. The apparatus according to claim 33 or 34, wherein X is less than or equal to a minimum of quantities of transport layers corresponding to the n second precoding matrices.

36. The apparatus according to any one of claims 31 to 35, wherein the first frequency-domain unit is k same frequency-domain units corresponding to the n second precoding matrices, each of the n second precoding matrices corresponds to K frequency-domain units, and 1 ≤ k ≤ K.

37. The apparatus according to any one of claims 29 to 36, wherein that the first precoding matrix is obtained based on the at least one first spatial-domain basis vector and the at least one second spatial-domain basis vector comprises:
the first precoding matrix is obtained based on an orthogonalization result of the at least one first spatial-domain basis vector and the at least one second spatial-domain basis vector.

38. The apparatus according to any one of claims 29 to 37, wherein
the processing unit is further configured to obtain the at least one second spatial-domain basis vector based on the indication information of the n second precoding matrices; and
the processing unit is further configured to obtain the first precoding matrix based on the at least one first spatial-domain basis vector and the at least one second spatial-domain basis vector.

39. A communication system, wherein the system comprises a first communication apparatus and a second communication apparatus, the first communication apparatus is configured to implement the method according to any one of claims 1 to 9, and the second communication apparatus is configured to implement the method according to any one of claims 10 to 19.

40. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement, by using a logic circuit or by executing code instructions, the method according to any one of claims 1 to 9 or the method according to any one of claims 10 to 19.

41. The communication apparatus according to claim 40, wherein the communication apparatus is a chip.

42. A chip module, comprising a transceiver component and a chip, wherein the chip is configured to perform the method according to any one of claims 1 to 9, or perform the method according to any one of claims 10 to 19.

43. A computer-readable storage medium, storing a computer program, wherein when the program is executed by a processor, the method according to any one of claims 1 to 9 or the method according to any one of claims 10 to 19 is implemented.
